Europäisches Patentamt

European Patent Office

Office européen des brevets

(11) Publication number: **0 434 167 A1**

## EUROPEAN PATENT APPLICATION

(21) Application number: 90203432.1

(51) Int. Cl.⁵: **E04F 17/08**, H02G 3/26

(22) Date of filing: 18.12.90

(30) Priority: 18.12.89 NL 8903091

(43) Date of publication of application:
26.06.91 Bulletin 91/26

(84) Designated Contracting States:
AT BE CH DE DK ES FR GB GR IT LI LU NL SE

(71) Applicant: INFILL SYSTEMS B.V.
Oude Delft 151
NL-2611 HA Delft(NL)

(72) Inventor: van Randen, Age
Strekkade 47
NL-3054 XN Rotterdam(NL)
Inventor: de Vries, Franciscus Jacobus Maria
Oude Delft 151
NL-2611 HA Delft(NL)
Inventor: Habraken, Nicolaas John
54 Trowbridge Street
Cambridge, Ma. 02138(US)

(74) Representative: Hoorweg, Petrus Nicolaas et
al
OCTROOIBUREAU ARNOLD & SIEDSMA
Sweelinckplein 1
NL-2517 GK The Hague(NL)

(54) Device for accommodating lines.

(57) A device for accommodating one or more lines (L), such as water, gas, electricity and/or other lines (L), in an outer or partition wall (2) or the like of a building structure, which wall (2) is provided at its foot with a recess of channel-like cross section, wherein in said channel-like space a substantially U-shaped profile (10) is close-fittingly arranged for receiving the lines (L), so separating the bearing function of the foot portion of the partition or bearing wall (2) in which the recess is situated, and the accommodating function for the lines (L) to be received in the recess, resulting in a considerably more flexible form of mounting lines (L) in a building.

FIG.4

## DEVICE FOR ACCOMMODATING LINES

The invention relates to a device for accommodating one or more lines, such as water, gas, electricity and or other lines, in an outer or partition wall or the like of a building structure, which wall is provided at its foot with a recess of channel-like cross section.

Proposals have already been made to accommodate various types of line in continuous channels arranged beforehand in partition or bearing walls. These channel-like recesses therein form an element determined by the dimensioning, weight and load of the wall. The element is therein not adapted to the different sorts of lines, which differ per room area. The apparently easy construction system, in which lines can be accommodated in pre-determined recesses in the wall, thereby results in a large number of modifications which considerably complicate the logistics during building.

The invention has for its object to obviate the above stated drawback and provides thereto a device, which is distinguished in that in the channel-like space a substantially U-shaped profile is close-fittingly arranged for receiving the lines.

Due to the separation proposed by the invention between the bearing function of the portion of the partition or bearing wall in which the recess is situated, and the accommodating function for the lines to be received in the recess, the above-mentioned construction method can take a considerably more flexible form. In any case, the profiles only need to be adapted to the sort of line and can be carried to any random length, irrespective of the dimensioning of the wall or the bearing profile. The additional profiles for the lines can thus extend beyond the standing side edge of the wall and a connection with vertical through-feeds can be considerably simplified.

The or each profile can therein be provided with a cover profile adapted for the application, such that for instance the cover profile can protrude outside the surface of the wall, but can also be flush therewith, whereby the arranging of tile walls, for example in bathrooms, can be carried out without problems.

The device is especially useful in an embodiment wherein the channel-like recess is embodied as a wall bearing element which preferably has an I-shaped cross-sectional form. Such a bearing element can first be placed on the construction floor, whereafter the partition wall can then be arranged. The bearing element still retains its bearing function within the scope of the invention, while the profile can be arranged in the bearing element later.

In a further embodiment the I-shaped bearing element can have a thickened body portion of, for instance, wood material.

In a further development the depth of the profile can be smaller than the depth of the channel-like recess, so that a space remains between the bottom of the U-shaped profile for the lines and the body plate of the bearing element. This space already has an insulating effect, but can be filled up with any other suitable material, for instance lead flashing, for the purpose of sound insulation.

In order to be able to arrange lines of differing type, it is recommended that the profile be given in cross section one or more ribs parallel to the flanges of the U-profile, which ribs serve as supporting gutters for the lines for arranging. Above mentioned and other features will be further elucidated in the figure description hereinbelow with reference to a drawing. In the drawing:

Fig. 1 shows a perspective view, partially in section, of a first embodiment of a bearing element for a wall;

Fig. 2 shows a view/section corresponding with fig. 1 of a second embodiment of a bearing element for a wall,

Fig. 3 and 4 each show respectively a view/section corresponding with fig. 1 and fig. 2 of the bearing element with wall provided with profiles for lines and the like,

Fig. 5 shows a top view, partially in section, halfway along the height of a bearing element at a corner join of two walls,

Fig. 6 is a standing section through a bearing element having profiles arranged therein on either side of a partition wall with different coverings,

Fig. 7 shows a section corresponding with fig. 5 at two connecting wall panels provided with vertical feed-through.

Designated in the figures with the numeral 1 is the bearing element for a wall 2, which bearing element rests directly on a bearing floor 3. The term bearing floor should be interpreted broadly here and can relate to any form of bearing floor, including decking layers, matrix tiles, etc arranged thereon. The bearing element shown in the figures has here an I-shaped form in cross section, that is, a body portion 4 with an upper flange 5 and a lower flange 6.

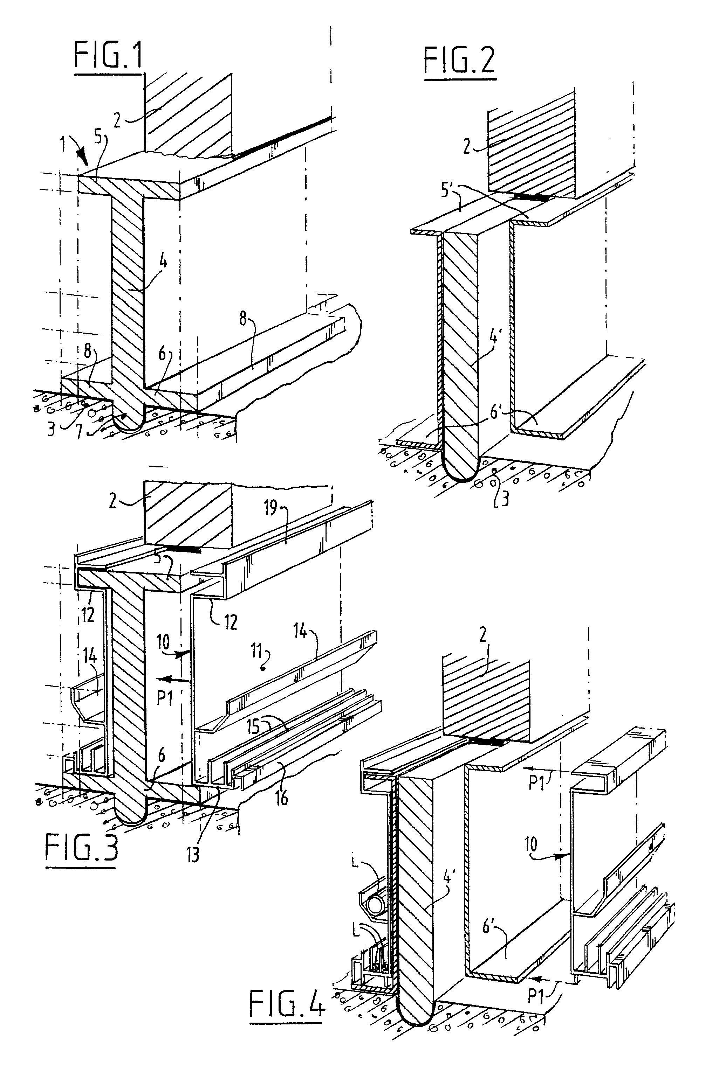

In fig. 1 the I-shaped bearing profile is embodied in wood material but within the scope of the invention it can of course be of any other suitable material. Arranged on the underside of the lower flange 6 a ridge 7 which fits in a recess in the bearing floor 3. These recesses can be arranged in the bearing floor in advance or be formed by matrix tiles laid on the floor. The I-shaped bearing profile with the ridge 7 is manufactured as a semi-manufacture.

The upper flange 5 has a width which corresponds with the thickness of the wall. A narrower width can also suffice here if desired.

The lower flange 6 has a greater width than the flange 5 such that the free edge 8 protrudes outside the surface of the wall 2. The distance between the two end edges 8 of the lower flange 6 is preferably equal to a matrix size that is frequently employed in building.

Fig. 2 shows an embodiment, wherein the I-shaped bearing profile consists of a solid core 4' which corresponds with the core 4 and ridge 7 in fig. 1. Arranged on either side of the core 4 is a U-profile of for instance metal the flanges whereof together form the outward pointing flanges 5' and 6' which correspond with the flanges 5 and 6 in fig. 1.

The I-shaped bearing element shown in fig. 1 and 2 forms, on either side of the wall 2 and on the underside thereof, a continuous, open, channel-like recess, which is formed by the bottom of the body plate 4 and the mutually facing surfaces of the flanges 5 and 6.

As can be seen in fig. 3 and 4, an insert profile 10 can be arranged in each of these channel-like recesses, which profile can for instance be made of plastic material. This insert profile is pushed into the channel-like recess in the direction of the arrow P1 until the position on the left in fig. 3 and 4 is reached.

The profile is substantially U-shaped and consists of a bottom plate 11 with two flanges 12 and 13 extending parallel to the flanges 5, 6.

Parallel to the flanges 12, 13 can be arranged extra ribs 14, which in cross section can display a virtually L-shaped form.

On the lower flange 13 separating ribs 15 can be arranged parallel to each other as well as an end flange 16 which is H-shaped in cross section. The ribs provide a division of the space on the inside of the U-shaped profile, which division is necessary to be able to arrange the various lines of differing type separately from each other.

It is noted that in the embodiment according to fig. 3 a space 18 can be reserved between the bottom plate 11 and the body plate 4, which space can be filled up with material having a damping property.

It is further noted that the upper flange 12 is provided with a T-shaped head flange 19, the limb of which can be arranged between the flange 5 and the underside of the partition wall 2.

After arranging the profiles 10, the lines L can be arranged in the relevant spaces bounded by the ribs 14, 15, 16.

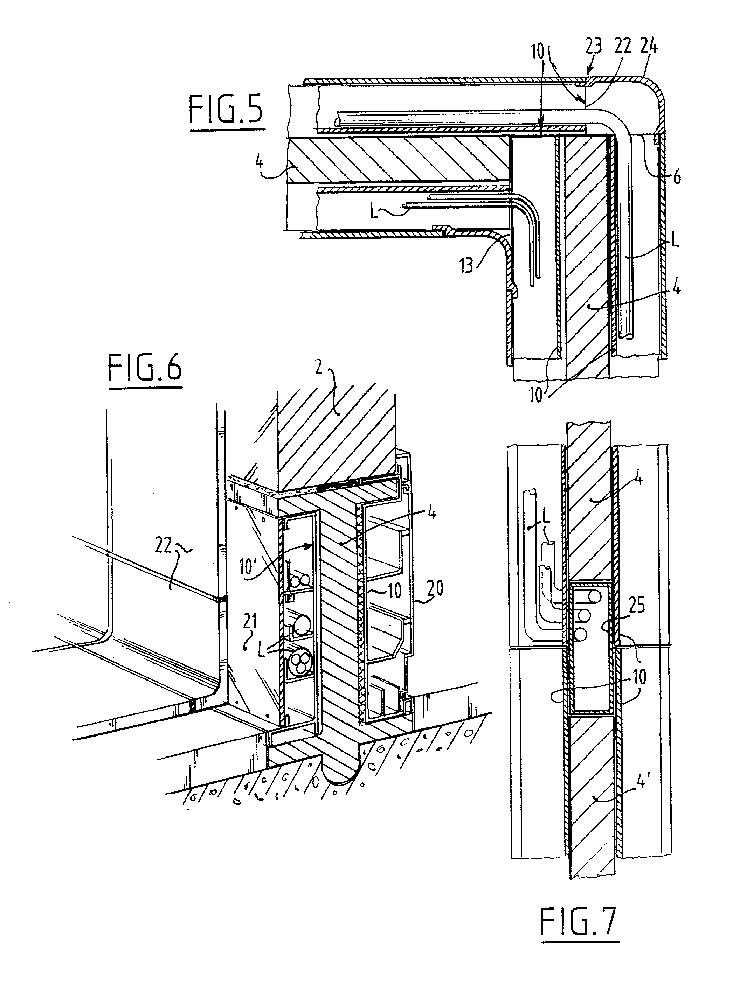

Fig. 5 shows a construction wherein in top view two partition walls 2 with bearing elements 4 are placed mutually perpendicular. It suffices herein to cause the one bearing profile to run as far as the stop surface 8 of the lower flange 6 of the other bearing element to connect to the head end side of the other bearing element. The profiles 10, which are independent of the bearing elements 4, can be fed through to halfway along the end face of the other wall, see at 23. It can be seen herefrom that due to the separation of functions a great flexibility of line carrying channels can be created. The lines L can be arranged round the corner without problem, wherein only corner covers 24 are needed to close off the space at the corner join. These can likewise be standard covers.

Fig. 6 shows a cross section, wherein the profiles on either side of the core 4 do not have the same cross section. These profiles are adapted to the spaces located on either side of the partition wall 2. The profile 10 on the right-hand side of the core 4 is thus embodied with a cover plate having a cover-over form, that is, it protrudes beyond the standing side surface of the wall 2. The cover profile 20 can be fixed in any suitable manner to the profile 10, for example by means of a snap connection.

The cover plate 21 on the left-hand side of the profile 10' is flat and lies flush with the side surface of the partition wall 2. It is thus possible to arrange a tile covering 22, used for instance in bathrooms. The lines L in the profile 10' are sufficiently insulated from the bath area, thus ensuring optimal safety. In the case of further through-feed beyond the bathroom to other areas, the profile 10' can nevertheless be extended with a profile 10. It can be seen herefrom that, irrespective of the manner of supporting the partition wall 2, profiles of different type can be accommodated in a channel-like space, thus creating an optimal flexibility of application, see for example the embodiment in fig. 5.

Fig. 7 shows a connection of two profile elements mutually in line, wherein the core of the bearing elements 4, 4' have ended at a slight mutual interval. The profiles for the lines 10 can have a length such that they strike against each other. Between or within the two wall portions or in a hollow wall on the bearing elements 4 a vertical channel 25 can connect above the opening, which channel can make a connection, via the bottom wall 11 of each profile 10, with the lines in that profile.

The invention is not limited to the above described embodiments.

## Claims

1. Device for accommodating one or more lines, such as water, gas, electricity and/or other lines, in an outer or partition wall or the like of a building structure, which wall is provided at its foot with a recess of channel-like cross section, **characterized in that** in the channel-like space a substantially U-shaped profile is arranged close-fittingly for receiving the lines.

2. Device as claimed in claim 1, **characterized in that** a cover plate co-acting with the profile is arranged.

3. Device as claimed in claim 1, **characterized in** that the channel-like recess is embodied as an element bearing the wall.

4. Device as claimed in claim 3, **characterized in that** the cross section of the channel-like bearing element has an I-shaped form.

5. Device as claimed in claim 4, **characterized in that** the channel-like bearing element has a core of determined thickness.

6. Device as claimed in claim 5, **characterized in that** the core of the bearing element is manufactured from wood material.

7. Device as claimed in any of the preceding claims 1-6, **characterized in that** the depth of the U-shaped profile is smaller than that of the channel-like space.

8. Device as claimed in claim 7, **characterized in that** the space between the profile and the bottom of the channel-like space is filled with a material having damping properties.

9. Device as claimed in any of the preceding claims, **characterized in that** the U-shaped profile has one or more ribs parallel to the flanges thereof.

10. Device as claimed in claim 9, **characterized in that** one or more ribs are L-shaped.

11. Building structure provided with a floor having recesses pre-arranged therein, **characterized in that** the core of the bearing element extends into these recesses in the floor.

12. Building structure as claimed in claim 11, **characterized in that** the recesses in the floor are formed by matrix tiles laid according to a determined pattern.

FIG.1

FIG.2

FIG.3

FIG.4

FIG.5

FIG.6

FIG.7

European
Patent Office

**EUROPEAN SEARCH
REPORT**

Application Number

**EP 90 20 3432**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y,A | CH-A-3 774 19 (BURKHARD)<br>* page 2, line 37 - page 4, line 30; figures 1-4 * | 1,3-5,9,2,<br>6,10,11,<br>12,7 | E 04 F 17/08<br>H 02 G 3/26 |
| | --- | | |
| Y,A | DE-U-7 510 974 (SIEMENS AG)<br>* page 2, line 11 - page 3, line 10; figure * | 2,1 | |
| | --- | | |
| Y,A | US-A-4 800 696 (MILLER ET AL.)<br>* column 3, line 53 - column 6, line 2; figures 1-5,7 * | 6,1-5 | |
| | --- | | |
| Y,A | US-A-4 800 695 (MENCHETTI)<br>* column 2, line 20 - column 4, line 36; figures 1-6 * | 10,1-5,7,<br>9 | |
| | --- | | |
| Y,A | WO-A-8 804 713 (INFILL SYSTEMS B.V.)<br>* page 6, line 1 - page 12, line 26; figures 1-8 * | 11,12,1-6 | |
| | -- -- -- -- | | |

TECHNICAL FIELDS
SEARCHED (Int. Cl.5)

E 04 F
H 02 G

The present search report has been drawn up for all claims

| Place of search | Date of completion of search | Examiner |
|---|---|---|
| The Hague | 18 March 91 | AYITER J. |